# EUROPEAN PATENT SPECIFICATION

(11) **EP 2 357 544 B1**
(45) Date of publication and mention of the grant of the patent: **22.10.2014**
(21) Application number: 09174946.5
(22) Date of filing: 03.11.2009
(51) Int. Cl.: E06B 9/11, G05D 23/20, E06B 9/32, E06B 9/68, E06B 9/56, E04F 10/00, E06B 9/24, G05D 25/02

(54) **Shading means control**
Steuerungsmethode für Sonnenschutzelemente mit Steuerugseinheit
Méthode de commande d'éléments de protection solaire et l'unite de controle

(43) Date of publication of application: 17.08.2011
(73) Proprietor: VKR Holding A/S, 2970 Hørsholm (DK)
(72) Inventor: Philipson, Bruno Harald, 3600, Frederikssund (DK); Byberg, Henrik Raun, 3450 Allerød (DK); Ebbe, Ulrik Vagn, 2670 Greve (DK)
(74) Representative: Olesen, Kaj

(56) References cited:
- WO-A2-2009/056144

## Description

### Field

The exemplary and non-limiting embodiments of this invention relate generally to a building shades and more particularly to sensor control of shades to improve climate and energy consumption.

### Background

Windows, doors and rooms may have shading means like awnings, roller shutters, shades, venetian blinds, electrochromic glass, screening devices etc. which may be operated by means of a controller which activates the motorised or electric shading means.

Further shading means influence the energy consumption for heating and cooling in order to adapt the interior climate of the buildings to specific user needs. Furthermore a window may comprise an exterior shutter and/or an interior screening device such as a roller blind, which may used to avoid the sun inside the building or to regulate the energy flow between the interior and the exterior during periods with relatively large temperature differences between the interior of the building and the climate outside.

For example WO2009056144 shows shade means which may be controlled to provide energy conservation.

### Summary

A building component (for example a window) may introduce energy loss directly due to convection/radiation or indirectly by using air condition or heating energy to adjust the indoor climate. One way to deal with this energy loss is to use expensive building components with higher insulation and low energy panes which allow less daylight.

Another approach is shading means control by timer and calendar, which is simple and easy for the user to predict/understand the system behaviour, but it does not provide optimum energy conservation due to variations and changes in season and weather.

It would be desirable to provide a control of shading means that improve the energy conservation of an associated building or window by automatically controlling the shading means to provide energy conservation.
It would be advantageous to provide shading means control that eliminate or reduce the drawbacks mentioned above and further provide a number of advantages, for example provide a system which is userfriendly, also as regards the installation procedure, and by means of which it will be easy to establish a well-performing system, which operates autonomously, with undue configuration effort.

In accordance with a first aspect there is provided a method of controlling building shade means according to claim 1.
Hereby the shading means can be set to reduce or increase the solar energy or reduce or increase the insulation of the shading means according to determined mode, season and light. Further it is learned that such control provides good energy conservation for various climates and various windows with different pane properties like g-values (solar transmittance) and u-values (insulation).

In accordance with a second aspect there is provided a system according to claim 12 to carry out the method of the first aspect.
In accordance with the first aspect energy conservation is configured to reduce and increase the heat gain based on the modes.

In accordance with the first aspect energy conservation is configured to reduce and increase the heat loss based on the modes.

In accordance with the first aspect energy conservation is provided according to heating and cooling modes/seasons. Because the sensor and control modes enable establishing the climate, the energy conservation becomes possible in all seasons and weather types.

In accordance with the first aspect the solar mode may include a day mode and a night mode and where energy conservation is to improve the insulation during the night mode.

In accordance with the first aspect the solar mode may include a day mode and a night mode and where energy conservation is to increase the heat gain when in a heating mode and day mode.

In accordance with the first aspect:
determining the heat mode, includes determining at least a first cooling mode and a second heating mode,
and/or
determining the solar mode, includes determining at least a first sunny solar mode and a second soft light or dark solar mode.
Hereby the type of energy conservation suitable can be established. The solar mode may distinguish sunny mode where heat gain may be realised and soft light or dark where no significant solar energy is provided. In soft light or dark the shading means may be closed to improve the insulation.

In accordance with the first aspect determining may include processing of the registered values according to threshold values. Determining the mode may be based on threshold values, for example threshold intervals, threshold functions or threshold fields. Hereby a mode may efficiently be determined.

In accordance with the first aspect the at least one temperature and/or solar value threshold comprises two or more values and the respective threshold value is selected based on at least one of the registered values. Hereby the threshold may for example depend on a mode, so one threshold is used in heating/wither mode and another threshold is used in cooling/summer mode, similarly with day mode and night mode, etc.

In accordance with the first aspect the at least one temperature and/or solar value threshold comprises two or more values, the respective threshold value is selected for an interval of a registered value where the registered value has a different nature than the value threshold value.
Hereby a solar value is defined for an interval, where the interval is based on the registered heat value. And/or the heat value is defined for an interval, where the interval is based on the registered solar value. Such alteration of the threshold according the registered values enables the shading control to work correctly in all places and seasons. Similarly a function of a value may be defined for a mode or interval only.

In accordance with the first aspect determining a heat mode, includes at least one temperature threshold defined between 6-16, preferably 8-14, more preferably 10-12 degrees Celsius.
Hereby tests and simulations have shown that the energy savings and climate benefits are particularly good when using temperature threshold values defined in this interval. Also this works for many places and climates. Such threshold may be suitable for determining between first cooling mode and a second heating mode and to establish if solar heat gain is undesired.

In accordance with the first aspect in at least one mode entering a power saving mode, where registering data of one or more external prevailing climate conditions is less frequent.
Hereby the lifetime of the sensors and/or controller may be improved. The power saving mode may be a dim/dark/night mode, where sensing and registering values during the night does not improve the control.
Similarly the power saving mode may be a function dependent on the registered climate data.

In accordance with the first aspect determining the solar mode, may include determining at least a first solar mode and a second solar mode where, the first solar mode is associated with luminous daylight and the second solar mode is associated with the dim/dark evening/night.

In accordance with the first aspect determining the solar mode, may include determining at least a first, second and third solar mode where,
a first solar mode is associated with luminous daylight and
a second solar mode associated with the soft light at evening and morning and a third solar mode associated with the dark at night.

In accordance with the first aspect determining a heat mode, including at least a first cooling mode and a second heating mode includes at least one temperature/heat threshold, and determining the first cooling mode when the temperature is below the threshold and, determining the second heating mode when the temperature is above the threshold.
Hereby season and consequently heat mode may be established, with a cooling heat mode where cooling is desired and a heating heat mode where heating is desired.

In accordance with the first aspect an at least one heat value threshold, includes two or more heat value thresholds and the heat value threshold used is based on the solar value registered.

In accordance with the first aspect determining the heat mode may include determining at least a first heat mode and a second heat mode based on a heat value threshold, the heat value threshold being a function of the registered solar value e.g. the heat threshold differs by solar value.
Hereby it may for example be possible to use a lower heat threshold when the weather is sunny, because a lower heat threshold will be compensated by the hot sunny weather and vice versa. This example achieves a good shading control where the control logic may provide stable and optimum controls.

In accordance with the first aspect setting a shade position that provides energy conservation includes:
setting a shading means position so that the amount of incident light is limited during a first mode or season and so that the amount of incident light through an aperture is increased during a second mode or season.
Hereby the heat may be established.

In accordance with the first aspect setting a shade position that provides energy conservation includes:
in a heating mode with solar value high e.g. above a threshold, to set the shading position to open to provide heat gain and/or,
in a cooling mode with solar value high e.g. above a threshold, to set the shading position to closed to provide reduced heat gain.

In accordance with the first aspect setting a shade position that provides energy conservation includes:
in a heating mode with solar value low e.g. below a threshold, to set the shading position to closed to provide improved insulation and/or,
in a cooling mode with solar value low e.g. below a threshold, to set the shading position open to provide reduced insulation.

In accordance with the first aspect the shading means may be a roller shutter configured to be installed on a roof window.
Roof windows are exposed to more than twice the solar energy compared to regular windows and active shade control provides increased energy conservation benefits. A roller shutter blocks 95% of the solar energy. Further a roller shutter is often designed to provide a good fit to a particular roof window and consequently a roller shutter provides both sun shading and also increased insulation. Hereby even a standard roof window may perform similar to energy conservation windows.

In accordance with the first aspect the solar sensor is direction sensitive and configured for mounting in association with the face of the shading means or the window associated with the shading means to detect the solar value in a direction which the shading means in question face.
Hereby sensor is installed to detect the value having an influence on the window/shade means in question the control may be customised for the window or shading means in question and provide even better energy conservation. Consequently plural solar sensors may be used e.g. a solar sensor for each shading means while one temperature sensor is enough, because the temperature applies for all shading devices.

In accordance with the first aspect the at least one external sensor is at least one external temperature sensor and at least one external solar sensor.
Hereby it is achieved that the external climate may be established and hereby energy conservation is possible. The modes may correspond to the season and daytime climate variations.

In accordance with the first aspect the at least one external sensor is at least one external wireless temperature sensor and at least one external wireless solar sensor. Hereby the wireless sensors may be installed without undue burden for the user and the wireless sensor allow installation on respective optimum places. Further no programming and/or connection of plugs and wires is needed.
One non-limiting advantage that is gained is for example the shading control may actively control the shading means to deliver energy reduction and/or the shading control may improve the energy balance of a building component like an associated window on which the system is installed.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. Steps do need not be performed in the disclosed sequence, unless explicitly defined. A position like open or closed should be interpreted like substantially open or substantially closed unless explicitly stated otherwise. All references to "a/an/the [element, device, component, means, step, etc]" are to be interpreted openly as referring to at least one instance of the element, device, component, means, step, etc., unless explicitly stated otherwise. Any characteristic is to be interpreted as a substantially characteristic unless explicitly stated otherwise.

### Brief description of the drawings

The foregoing and other aspects of the teachings of this invention are made more evident in the following description, when read in conjunction with the attached figures, wherein:
Fig. 1 shows an example of a building and shading means.
Fig. 2 shows an example chart of a theoretical solar value.
Fig. 3 shows an example chart of solar and heat values.
Fig. 4-6 shows examples of thresholds.
Fig. 7-8 show examples of a plot of solar and heat relationship.
Fig. 9 show an example of a flow chart.

### Detailed description

The disclosed embodiments will now be described more fully hereinafter with reference to the accompanying drawings, in which certain examples are shown. These disclosed examples may, however, be embodied in many different forms and should not be construed as limited; rather, these examples are provided by way of example so that this disclosure will be thorough and complete, and will fully convey the scope of the disclosed embodiments to those skilled in the art. Like numbers refer to like elements throughout.

Active shading position control to provide energy conservation may be provided by a timer and calendar, but this requires a setup. Sensor based control may provide an autonomous control which is easy for the end user. Sensor based shading control is however not adapted so broadly, because sometimes due to sensor readings or the control logic the shade position is erroneous and also there is a lack of autonomous controllers where set up programming and calibration is not necessary. Also the installation of the sensor means may be demanding, in particular when the shading means is located on the roof or other place with difficult access.

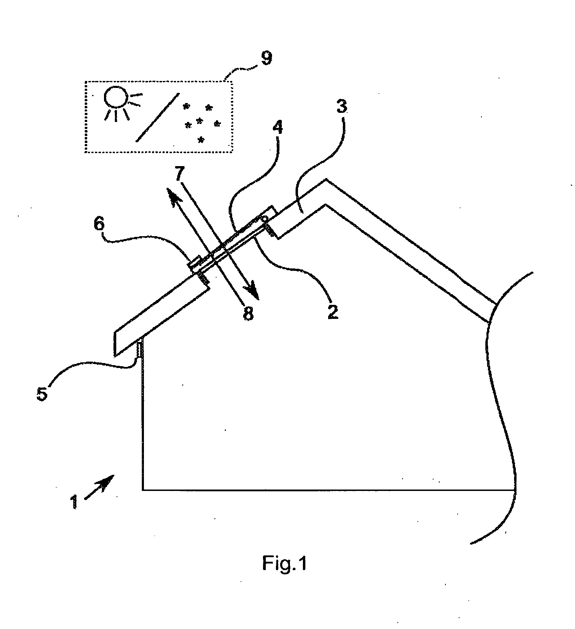

Fig. 1 illustrates a building (1). As illustrated by the arrows 7,8 heat energy may flow both from the outside to the inside of the building and vice versa by heat conduction, convection or radiation etc. As illustrated by the arrows 7,8 the roof window 2 is an more active building component, because more energy may enter or leave through the window (2), compared to the insulated roof (3). The energy flow depends on the external prevailing climate conditions (9). The window has shading means (4) like for example a roller shutter. Shading means (4) provide means to adjust the energy properties of the building component/window (2) and consequently proper control of shading means may provide a window with better performance.
In one example the control comprises a sensor (5) for determining periods of increasing and decreasing temperature. This sensor (5) is preferably a temperature sensor, which over predetermined time periods determines if the outside temperature is rising or falling so as to detect a change in the weather conditions and to adjust the optimum setting of the shading means accordingly. In one example the control comprises a sensor (6) for detecting the sun in order to establish if there is sun heat and whether it is day or night. In a further improvement, sensors may be combined for determining periods of increasing and decreasing temperature, the control comprises a sensor for determining the light intensity, i.e. direct solar radiation, which may serve as a significant source for interior heating. This sensor may for instance be a solar sensor. By determining the setting of for instance a roller shutter of a roof window in a pitched roof by means of a measurement of exterior light intensity, the direct incident of sunlight may for instance on a cloudless day during wintertime provide a significant source of heating and thereby reducing the overall energy consumption. Hence a solar intensity sensor is suitable regulate the energy flow between the exterior and the interior of a building based on continuous sensor readings.

The solar sensor may be a photodiode sensor or any suitable sensor, configured to detect the level of heat energy provided by the sun. Daylight with the same light intensity may provide very different energy/heat. So registering data of one or more external prevailing climate conditions may include a solar sensor configured for registering a solar value indicative of the solar heat/energy provided. For example the solar sensor is configured to register visible daylight and/or the solar heat in the infrared spectrum. Solar glare and other comfort related parameters are less relevant for the conservation of energy. The solar sensor may comprise more solar sensors, configured for detecting separate solar conditions. For example detect different wavelengths or different directions.

The solar sensor may be mounted on the side of the shading means like a roller shutter. To obtain maximum benefits of the system one sensor per roof orientation may be added. For example east, south, west or north. The solar sensor may be direction sensitive and detect a solar value from the direction having an influence on the shade means in question.
A temperature sensor may be an outdoor temperature sensor which is mounted under the eaves on an outside wall, where it accurately detects outdoor temperatures all day. The temperature sensor reading is preferably not affected by direct sunlight, which may be provided by installing the temperature sensor in the shadow or by the design of the temperature
sensor. The temperature sensor may have a calibration circuit etc. In one example the temperature sensor may be installed on the northern side of the building, where the sun is less likely to affect the sensor reading.

The sensor(s) and controller may communicate by wire, wirelessly or be integral. The sensor(s) may be provided with the shading means. The sensor(s) is easy to install and retrofit, when the sensors are wireless. The sensors may also be powered by battery, renewable power source or by power supply, for example from the building window or shading means. The sensors may be provided as a single weather station unit with plural sensor types. By adapting a control/sensor unit as a self-contained unit for exterior mounting, the unit may advantageously be mounted in relation to a device to be controlled by means on the measurements provided by the unit and furthermore a power source from a screening device or a window may be used to power the control unit. For example a control unit is mounted on a top cover of a window installation or exterior screening device such a roller blind. However, in a system of controllable devices facing different direction of a building, a general measurement of the prevailing climate conditions may be achieved by providing a control unit at a position that may provide a general measure of the prevailing climate and weather conditions to be used for all controllable devices such as at the roof ridge of a pitched roof.

In a further example, the shading means control comprises at least two season modes of the exterior climate, which are determined in accordance with at least one measured value. The prevailing exterior climate is used to determine the setting of the shading means for optimum flow of energy between the interior and the exterior of the building for each of said season modes.

The provision of season modes makes it possible to choose the setting differently for each season mode. In one practically simple embodiment, the optimum setting is chosen so that the amount of incident light/heat is limited during a first season mode and so that the amount of incident light/heat is increased during a second season mode, in dependence on the day or night mode. The solar sensor may be used to establish if a solar mode is a day mode or a night mode. Advantageously the control of the shading means provide energy conservation.

The control optimises the position of sun shading means in both heating and cooling season mode. During the cooling season/mode the control ensures that shading means is closed when the sun rays would create overheating. Thereby reducing the cooling demand to a minimum and ensuring a steady comfortable indoor temperature. During heating season/mode the control ensures that shading means are open when the sun shines and solar gains are available to heat the building thereby reducing the heating demand. During the night the shading will close to add insulation to the windows thereby further reducing the heating demand.

For example in winter morning, the outdoor temperature sensor sets the system in winter mode. The sun sensor detects the sun intensity and the roller shutters open. Until the sun rises the roller shutters will be closed to add insulation. From sunrise to sunset the roller shutters are open. Hereby the building gets in daylight and heat from the sun. Hereby the inside pane surface temperature is increased by up to several degrees.

For example in winter evening/night the outdoor temperature sensor sets the system in winter mode. The sun intensity sensor registers the low sun intensity and the roller shutters close and add insulation to the window when closed. From sunset to sunrise the roller shutters are closed. Hereby the insulation of the roof window at night time is improved. The insulation of a window provided with a closed roller shutter can be improved by up to 20%.

For example in summer morning the outdoor temperature sensor set the system in summer mode. The sun intensity sensor registers high sun intensity and the roller shutters close before overheating occurs. The shutter protects against heat intake. Hereby the indoor temperatures are 5°C lower during a warm summer day and the cooling demand may be reduced by 50 %, while the roller shutter protects against heat intake.

For example in summer evening/night the outdoor temperature sensor sets the system in summer mode. The sun intensity sensor registers low sun intensity and the roller shutters open to allowing light to come in during the afternoon and evening. Hereby a naturally balanced indoor climate is provided with energy conservation.

The setting of the shading means is configured to provide energy conservation. This may require that the shading means block the sun and consequently the room illumination and user comfort may be affected by energy conservation.

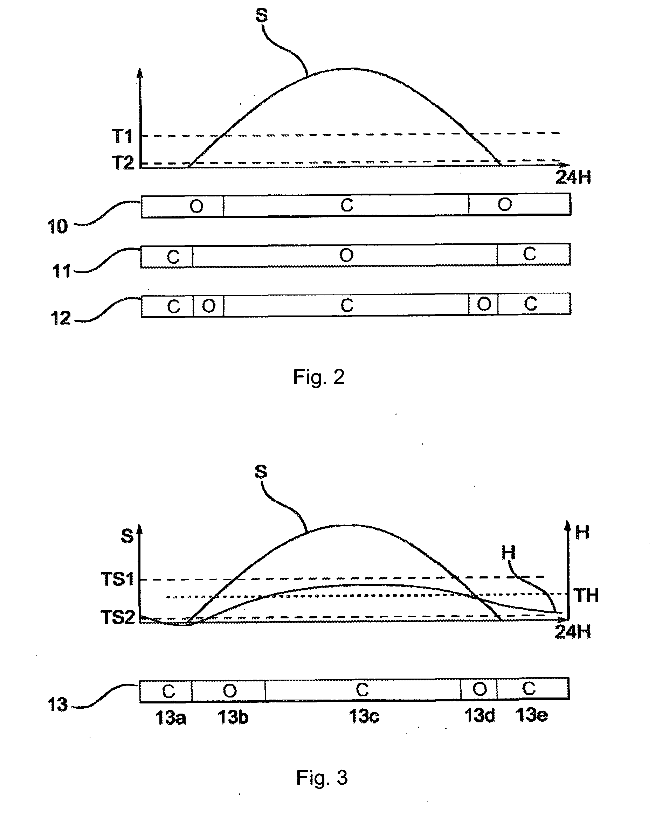

Fig. 2 illustrates an example of the theoretical solar intensity (S) during a day. Shading positions and possible energy conservation based on solar value is illustrated by the timelines (10-13). In these examples the shading means may be substantially open (O) or closed (C). A solar threshold T1 and T2 is used in this example to show how energy conservation may be provided.
In timeline (10) the energy conservation is set to reduce the heat gain, so when a solar value is higher than a threshold T1, the shading means is closed to reduce the heat gain, because the solar value is high. When the solar value is below the threshold T1 the shading means are open to allow light in the building, because such low solar value the energy conservation benefits are small.
In timeline (11) the energy conservation is set to improve the insulation by closing the shading means, so when the solar value is lower than threshold T2, the sun does not provide considerable energy and consequently the shading means are closed. Here the threshold T2 corresponds to dark.
In timeline (12) the energy conservation is set to reduce the heat gain and to improve the insulation at night, so air condition energy is reduced. Here the shading means are open in the morning and evening only e.g. between T1 and T2 only, so the sunlight is allowed, but only when the sun energy is not too powerful.

Fig. 3 illustrates more details by showing the theoretical solar intensity (S) and also theoretical heat temperature (H). The solar value has solar thresholds TS1 and TS2 to determine dark, soft light and sunny climate. Below TS2 dark is detemined, between TS2 and TS1 soft light is determined and above TS1 sunny is determined. The heat temperature threshold TH in this example determines if it is cooling or heating mode. The timeline (13) shows how this example may provide energy conservation. At (13a) the solar value is below TS2 e.g. dark and the heat value is below TH e.g. heating mode is determined. So the shading means are set to closed position to improve the insulation. At (13b) the solar value indicates soft light e.g. between TS1 and TS2, so the shading means are open to provide daylight. At (13c) the heat value changes above the heat threshold TH and consequently the heat mode changes to cooling. So during cooling mode when solar value is above TS1 the shading means are closed to reduce heat gain. At (13d) the solar value is soft light e.g. between TS2 and TS1 so the shading means are open to provide daylight. At (13e) the heat value is below the threshold TH and the heat mode changes to heating. And because the solar value indicates dark (below TS2), the shading means are closed to improve the insulation.
By using 2 thresholds (TS1 and TS2) the solar intensity may be determined among sunny, soft light and dark. Sunny corresponds to direct sunlight and soft light corresponds to overcast weather or twilight. Dark substantially corresponds to night.

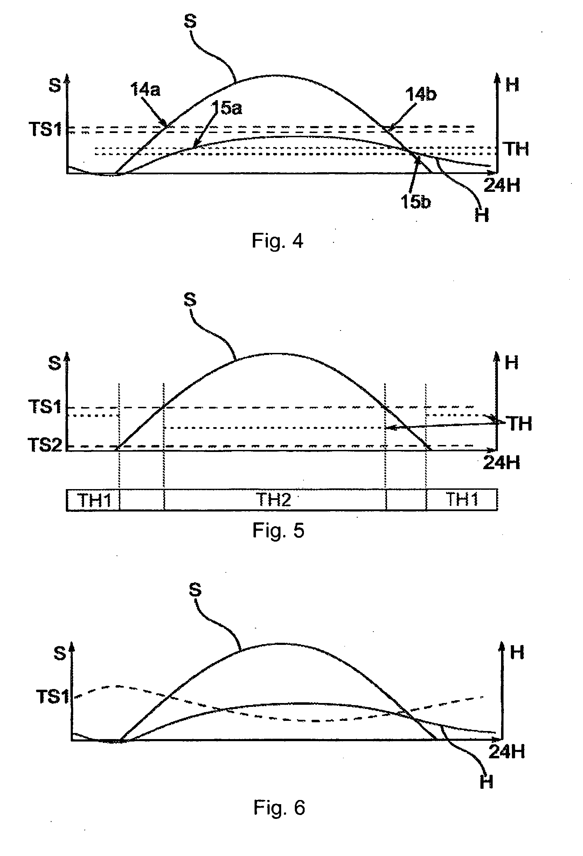

Fig. 4 illustrates that a threshold like TS1 may comprise two threshold values and determining a change includes crossing both values. For example to determine a change the solar value (S) exceeds the higher threshold value (14a) and the solar value decreases the lower threshold value at (14b). This provides a hysteresis and prevents an unstable system. The two or more value thresholds may provide an intermediate gap with no change of the setting of the shade position. The same applies for the heat threshold TH as indicated by (15a) and (15b). Consequently a threshold may comprise two thresholds which when exceeded trigger one change only.

Fig. 5 illustrates that a threshold may comprise two or more values. For example the heat threshold TH may depend on the solar value. So during dark solar value (e.g. S below TS2) a first heat threshold TH1 is active. And during sunny solar value (e.g. S above TS1) a second threshold TH2 is active. So the solar threshold may depend on the heat value and/or the heat threshold may depend on the solar value. This provides threshold intervals where a threshold is relevant for an interval only of the value on which the threshold depends. For example an at least one solar value threshold, includes two or more solar value thresholds and the solar value threshold used is based on the heat value registered. For example an at least one heat value threshold, includes two or more heat value thresholds and the heat value threshold used is based on the solar value registered.

Fig. 6 illustrates that a threshold may be a function of a value. For example the solar threshold (TS1) may be a function of the temperature H. For example the function may be inverse, so that higher temperature results in a lower threshold and consequently during hot temperature the sun will be shaded sooner.

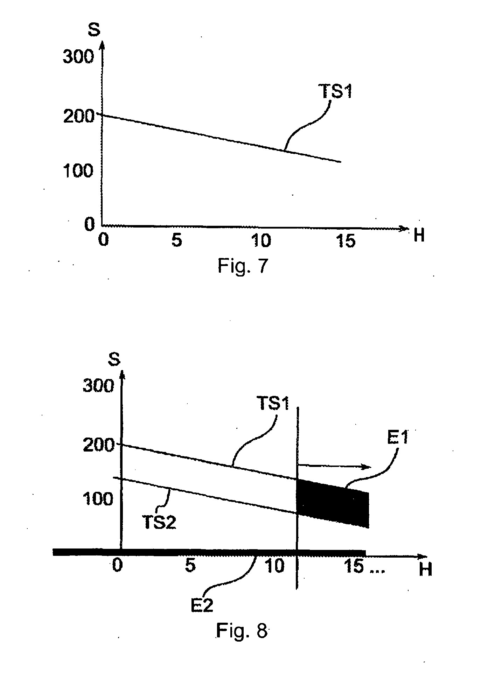

Fig. 7 illustrates the relationship between the solar value and the heat. For example the heat may be temperature (degrees Celsius) and the solar value may be power e.g. w/m². The Solar threshold (TS1) is a function of the heat. For example during high temperature the sun will be shaded sooner and during low temperature the sun will be shaded later.

Fig. 8 illustrates how a threshold being a function of a value may be defined for a mode or interval only. For example if the heat value is above 12 degrees the solar threshold TS1 and TS2 are defined. When the upper solar threshold TS1 is exceeded the setting is substantially closed. Similarly when the solar value decreases below the lower threshold TS2 the setting is substantially opened. This is illustrated by the area E1.

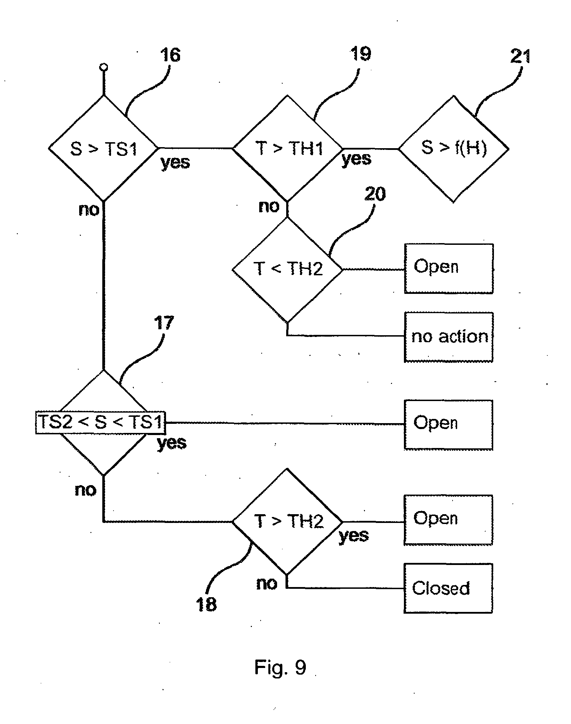

Fig. 9 shows an example of a flow chart based on the mode and/or threshold examples presented before.
The solar mode is determined in branch (16) and (17) where the solar value is determined by solar thresholds (TS1 and TS2). Once the solar mode is determined the heat mode is determined in branch (18, 19, 20) by heat thresholds (TH1 and TH2). In mode (21) a threshold which is a function of the heat/temperature is used. The result of branches (18, 20, 21) is a heat conservation setting. The solar thresholds in branch (16, 17) may determine the solar mode, like for example sunny, soft light and dark. The heat thresholds in branch (18, 19, 20) may determine heating heat mode and cooling heat mode. The threshold in (18, 19, 20) may also be the same threshold (TH1) or several different thresholds. The threshold in 18 and 20 may also differ.

In one example the heat threshold is based on a threshold in the interval of 10-18 degrees, preferably 12-16, more preferable about 14 degrees. Test and simulation have shown that a threshold in this interval is good for determining when heat gain should be blocked in the respective seasons. It is possible to switch the sequence in the flow chart example so heat mode is determined first and then the solar mode. Also the number of branches and thresholds may be decreased or increased.

It will be understood that the embodiments described herein are merely exemplary and that variations and modifications of the teachings will still fall within the scope of this invention. For example the energy conservation setting of the shading means is substantially open or substantially closed. It is possible to provide other energy conservation settings, like a day mode closed and night mode closed, where the day mode closed position closes 90% only while the night mode closed position closes 100%. Such closed setting allows some light to illuminate the building in the daytime (90%) while still providing good energy conservation. Similarly a setting like closed or open may be a function of a value, like for example solar value and/or temperature value. Also the closed position may also be user defined. For example the shading means may have adjustable reflection/absorbing properties, which may be used to reflect energy in one mode and absorb heat gain in another mode. This may also be provided by two shading means, each shading means having respective heat/insulation/absorbing/reflecting properties and each shading means is used in the suitable mode. The at least one external sensor may embody several sensor types, like temperature, solar, sun, light, sun angle, sun intensity, compass, gps etc. Furthermore, some of the features of the examples of this invention may be used to advantage without the corresponding use of other features. As such, the foregoing description should be considered as merely illustrative of the principles, teachings, examples and exemplary embodiments of this invention, and not in limitation thereof.

## Claims

1. A method of controlling building shade means comprising:
registering values of external prevailing climate conditions by registering a temperature value by at least one external temperature sensor (5) and registering a solar value by at least one solar sensor (6)
**characterised in that**:
determining a heat mode by means of the temperature sensor value (H),
the heat mode (18,19,20), includes at least a first cooling mode where cooling is desired and a second heating mode where heating is desired,
determining a solar mode by means of the solar sensor.value (S),
the solar mode (16,17), includes at least a first sunny solar mode where heat gain may be realised and a second soft light or dark solar mode where no significant solar energy is provided,
and setting a shade position that provides energy conservation by means of the modes.

2. A method according to the previous claim, wherein
determining the heat and/or solar mode includes,
at least one temperature and/or solar value threshold (TH,TS),
determining a first mode when the value is above the threshold and, determining a second mode when the value is below the threshold.

3. A method according to any previous claim, wherein
determining the heat and/or solar mode includes,
determining at least a first mode and a second mode based on a value threshold (TH,TS),
the value threshold being a function (Fig.7 TS1, Fig.9 21) of another registered value (H,S).

4. A method according to any previous claim, wherein the at least one temperature and/or solar value threshold (TH,TS) comprises two or more values (TH1,TH2,TS1,TS2) and
the respective threshold value is selected based on at least one of the registered values so the solar threshold depends on the heat value (H) and/or the heat threshold depends on the solar value (S).

5. A method according to any previous claim, wherein the at least one temperature and/or solar value threshold (TH,TS) comprises two or more values (TS1,TS2, TH1,TH2), the respective value threshold is selected for an interval of a registered value (H,S) where the registered value has a different nature than the value threshold value.

6. A method according to any previous claim, wherein the at least one temperature and/or solar value threshold (TH,TS) for at least an interval includes two or more thresholds (14a,14b);
at least a first threshold (14a) and a second threshold (14b), the first threshold being larger than the second threshold and,
determining a first mode when the value is above the first threshold (14a) and determining a second mode when the value is below the second threshold (14b).

7. A method according to any previous claim, wherein determining a heat mode, includes at least one temperature threshold (TH) defined between 6-16, preferably 8-14, more preferably 10-12 degrees Celsius.

8. A method according to any previous claim, wherein setting a shade position that provides energy conservation includes:
in a heating heat mode and low solar mode e.g. below a threshold, the shade means is closed to improve the insulation.

9. A method according to any previous claim, wherein setting a shade position that provides energy conservation includes:
in a first heat mode when a solar value indicate sunny setting the position substantially closed
and in a second heat mode when a solar value indicate sunny setting the position substantially open.

10. A method according to any previous claim, wherein
in at least one mode entering a power saving mode, where registering data of one or more external prevailing climate conditions is less frequent.

11. A method according to any previous claim, wherein determining a solar mode includes at least a sunny mode and a soft light mode and a dark night mode.

12. A system comprising shading means, a controller and at least one solar sensor and one temperature sensor configured when in use to carry out the method of claim 1-11.

## Patentansprüche

1. Verfahren zum Steuern von Abschattungsmitteln für Gebäude, Folgendes umfassend:
Erfassen von Werten außen herrschender Wetterbedingungen durch das Erfassen eines Temperaturwerts durch wenigstens einen äußeren Temperatursensor (5) und das Erfassen eines Sonnenwerts durch wenigstens einen Sonnensensor (6),
und durch Folgendes gekennzeichnet:
Festlegen eines Wärmemodus mittels des Temperatursensorwerts (H), wobei der Wärmemodus (18, 19, 20) wenigstens einen ersten Kühlungsmodus, bei dem Kühlen gewünscht ist, und einen zweiten Heizungsmodus, bei dem Heizen gewünscht ist, umfasst,
Festlegen eines Sonnenmodus mittels des Sonnensensorwerts (S), wobei der Sonnenmodus (16, 17) wenigstens einen ersten sonnigen Sonnenmodus, bei dem ein Wärmegewinn realisiert werden kann, und einen zweiten Schwachlicht- oder dunklen Sonnenmodus, bei dem keine wesentliche Sonnenenergie bereitgestellt wird, umfasst,
und Einstellen einer Abschattungsposition, die mittels der Modi eine Energieeinsparung bereitstellt.

2. Verfahren nach dem vorhergehenden Anspruch, wobei
das Festlegen des Wärme- und/oder Sonnenmodus Folgendes umfasst:
wenigstens einen Schwellwert für den Temperatur- und/oder Sonnenwert (TH, TS),
Festlegen eines ersten Modus, wenn der Wert über dem Schwellwert liegt, und
Festlegen eines zweiten Modus, wenn der Wert unter dem Schwellwert liegt.

3. Verfahren nach einem der vorhergehenden Ansprüche, wobei
das Festlegen des Wärme- und/oder Sonnenmodus Folgendes umfasst:
Festlegen wenigstens eines ersten Modus und eines zweiten Modus basierend auf einem Wert-Schwellwert (TH, TS),
wobei der Wert-Schwellwert von einem weiteren erfassten Wert (H, S) abhängt (Fig. 7 TS1, Fig. 9 21).

4. Verfahren nach einem der vorhergehenden Ansprüche, wobei der wenigstens eine Schwellwert für den Temperatur- und/oder Sonnenwert (TH, TS) zwei oder mehr Werte (TH1, TH2, TS1, TS2) umfasst, und
der jeweilige Schwellwert basierend auf wenigstens einem der erfassten Werte ausgewählt wird, derart, dass der Sonnenschwellwert vom Wärmewert (H) abhängt und/oder der Wärmeschwellwert vom Sonnenwert (S) abhängt.

5. Verfahren nach einem der vorhergehenden Ansprüche, wobei der wenigstens eine Schwellwert für den Temperatur- und/oder Sonnenwert (TH, TS) zwei oder mehr Werte (TS1, TS2, TH1, TH2) umfasst und der jeweilige Wert-Schwellwert für ein Intervall eines erfassten Werts (H, S) ausgewählt wird, wobei der erfasste Wert von einer anderen Art ist als der Wert-Schwellwert.

6. Verfahren nach einem der vorhergehenden Ansprüche, wobei der wenigstens eine Schwellwert für den Temperatur- und/oder Sonnenwert (TH, TS) für wenigstens ein Intervall zwei oder mehr Schwellwerte (14a, 14b) umfasst;
darunter wenigstens einen ersten Schwellwert (14a) und einen zweiten Schwellwert (14b), wobei der erste Schwellwert größer ist als der zweite Schwellwert, und
Festlegen eines ersten Modus, wenn der Wert über dem ersten Schwellwert (14a) liegt, und Festlegen eines zweiten Modus, wenn der Wert unter dem zweiten Schwellwert (14b) liegt.

7. Verfahren nach einem der vorhergehenden Ansprüche, wobei das Festlegen eines Wärmemodus wenigstens einen Temperaturschwellwert (TH) umfasst, der zwischen 6 und 16, vorzugsweise 8 und 14 und noch bevorzugter 10 und 12 Grad Celsius definiert ist.

8. Verfahren nach einem der vorhergehenden Ansprüche, wobei das Einstellen einer Abschattungsposition, die eine Energieeinsparung bereitstellt, Folgendes umfasst:
in einem Heizungs-Wärmemodus und niedrigem Sonnenmodus, beispielsweise unterhalb eines Schwellwerts, wird das Abschattungsmittel geschlossen, um die Isolierung zu verbessern.

9. Verfahren nach einem der vorhergehenden Ansprüche, wobei das Einstellen einer Abschattungsposition, die eine Energieeinsparung bereitstellt, Folgendes umfasst:
in einem ersten Wärmemodus Einstellen der Position auf im Wesentlichen geschlossen, wenn ein Sonnenwert sonnig anzeigt,
und in einem zweiten Wärmemodus Einstellen der Position auf im Wesentlichen offen, wenn ein Sonnenwert sonnig anzeigt.

10. Verfahren nach einem der vorhergehenden Ansprüche, wobei
in wenigstens einem Modus ein Energiesparmodus gestartet wird, bei dem das Erfassen von Daten von einer oder mehreren außen herrschenden Wetterbedingungen weniger häufig geschieht.

11. Verfahren nach einem der vorhergehenden Ansprüche, wobei das Festlegen eines Sonnenmodus wenigstens einen sonnigen Modus und einen Schwachlicht-Modus und einen dunklen Nacht-Modus umfasst.

12. System, das Abschattungsmittel, eine Steuerung und wenigstens einen Sonnensensor und einen Temperatursensor umfasst und das dafür eingerichtet ist, während des Betriebs das Verfahren nach Anspruch 1 bis 11 auszuführen.

## Revendications

1. Procédé de commande de moyens de protection solaire d'immeuble comprenant :
l'enregistrement de valeurs de conditions climatiques régnantes externes en enregistrant une valeur de température par au moins un capteur de température externe (5) et l'enregistrement d'une valeur solaire par au moins un capteur solaire (6) **caractérisé par** :
la détermination d'un mode chaleur au moyen de la valeur de capteur de température (H), le mode chaleur (18, 19, 20) comprend au moins un premier mode de refroidissement où un refroidissement est désiré et un deuxième mode de chauffage où un chauffage est désiré,
la détermination d'un mode solaire au moyen de la valeur de capteur solaire (S), le mode solaire (16, 17) comprend au moins un premier mode solaire ensoleillé où un gain de chaleur peut être réalisé et un deuxième mode solaire de lumière douce ou obscurité où aucune énergie solaire significative n'est fournie,
et le réglage d'une position de protection solaire qui fournit une économie d'énergie au moyen des modes.

2. Procédé selon la revendication précédente, dans lequel
la détermination du mode chaleur et/ou solaire comprend
au moins un seuil de valeur de température et/ou solaire (TH, TS),
la détermination d'un premier mode quand la valeur est supérieure au seuil et
la détermination d'un deuxième mode quand la valeur est inférieure au seuil.

3. Procédé selon une quelconque revendication précédente, dans lequel
la détermination du mode chaleur et/ou solaire comprend
la détermination d'au moins un premier mode et un deuxième mode sur la base d'un seuil de valeur (TH, TS),
le seuil de valeur étant une fonction (Fig. 7 TS1, Fig. 9 21) d'une autre valeur enregistrée (H, S).

4. Procédé selon une quelconque revendication précédente, dans lequel l'au moins un seuil de valeur de température et/ou solaire (TH, TS) comprend au moins deux valeurs (TH1, TH2, TS1, TS2) et
la valeur de seuil respective est sélectionnée sur la base d'au moins une des valeurs enregistrées de manière que le seuil solaire dépende de la valeur de chaleur (H) et/ou le seuil de chaleur dépende de la valeur solaire (S).

5. Procédé selon une quelconque revendication précédente, dans lequel l'au moins un seuil de valeur de température et/ou solaire (TH, TS) comprend au moins deux valeurs (TS1, TS2, TH1, TH2), le seuil de valeur respectif est sélectionné pour un intervalle d'une valeur enregistrée (H, S) où la valeur enregistrée a une nature différente de la valeur de seuil de valeur.

6. Procédé selon une quelconque revendication précédente, dans lequel l'au moins un seuil de valeur de température et/ou solaire (TH, TS) pour au moins un intervalle comprend au moins deux seuils (14a, 14b) ;
au moins un premier seuil (14a) et au moins un deuxième seuil (14b), le premier seuil étant supérieur au deuxième seuil et
la détermination d'un premier mode quand la valeur est supérieure au premier seuil (14a) et
la détermination d'un deuxième mode quand la valeur est inférieure au deuxième seuil (14b).

7. Procédé selon une quelconque revendication précédente, dans lequel la détermination d'un mode chaleur comprend au moins un seuil de température (TH) défini entre 6 et 16, de préférence 8 et 14, de manière davantage préférée 10 et 12 degrés Celsius.

8. Procédé selon une quelconque revendication précédente, dans lequel le réglage d'une position de protection solaire qui fournit une économie d'énergie comprend :
dans un mode chaleur de chauffage et un mode solaire faible par exemple au-dessous d'un seuil, les moyens de protection solaire sont fermés pour améliorer l'isolation.

9. Procédé selon une quelconque revendication précédente, dans lequel le réglage d'une position de protection solaire qui fournit une économie d'énergie comprend :
dans un premier mode chaleur quand une valeur solaire indique ensoleillé, le réglage de la position sensiblement fermée
et dans un deuxième mode chaleur quand une valeur solaire indique ensoleillé, le réglage de la position sensiblement ouverte.

10. Procédé selon une quelconque revendication précédente, dans lequel
dans au moins un mode, l'entrée dans un mode d'économie d'énergie, où l'enregistrement de données d'une ou plusieurs conditions climatiques régnantes externes est moins fréquent.

11. Procédé selon une quelconque revendication précédente, dans lequel la détermination d'un mode solaire comprend au moins un mode ensoleillé et un mode lumière douce et un mode nuit noire.

12. Système comprenant des moyens de protection solaire, un dispositif de commande et au moins un capteur solaire et un capteur de température configurés, durant l'utilisation, pour exécuter le procédé selon la revendication 1 à 11.
